# EUROPEAN PATENT SPECIFICATION

(11) **EP 4 324 902 B1**
(45) Date of publication and mention of the grant of the patent: **21.10.2026**
(21) Application number: 23218741.9
(22) Date of filing: 21.12.2018
(51) Int. Cl.: C12C 1/027, C12C 1/047, C12C 1/125, C12C 1/18, C12C 7/00, C12C 7/01, C12C 7/04

(54) **FAST METHODS FOR PREPARING CEREAL EXTRACTS**
SCHNELLE VERFAHREN ZUR HERSTELLUNG VON GETREIDEEXTRAKTEN
PROCÉDÉS RAPIDES DE PRÉPARATION D'EXTRAITS DE CÉRÉALES

(30) Priority: 28.12.2017 EP 17210963
(43) Date of publication of application: 21.02.2024
(62) Document number(s) of the earlier application(s) in accordance with Art. 76 EPC: 18833054.2 / 3 732 280
(73) Proprietor: Carlsberg A/S, 1799 Copenhagen V (DK)
(72) Inventor: Knudsen, Søren, 1799 København V (DK); Lok, Finn, 1799 København V (DK); Krucewicz, Katarzyna, 1799 København V (DK); Thomsen, Hanne, 1799 København V (DK); Marri, Lucia, 1799 København V (DK); Wendt, Toni, 1799 København V (DK); Harholt, Jesper, 1799 København V (DK)
(74) Representative: Høiberg P/S

(56) References cited:
- EP-A1- 0 743 361
- WO-A1-2010/140563
- WO-A1-2011/127372
- WO-A1-2018/001882
- GB-A- 1 121 394
- GB-A- 1 316 226
- GB-A- 1 384 292
- US-A- 3 446 708

## Description

### Technical field

The present invention relates, generally, to germination and preparation of aqueous extracts of cereals (e.g. prepared through mashing), including processes used to produce beer. The invention thus provides methods for fast germination and preparation of aqueous extracts of cereals. The methods significantly speed up the process of preparing wort for production of cereal-based beverages, while maintaining the potential for preparing said wort with high levels of fermentable sugars, preferably with low levels of β-glucan and xylan.

### Background of the Invention

In commercial malting processes, barley grains are germinated, or malted, under controlled conditions that allow partial mobilization of the starch and protein reserves of the starchy endosperm over a period of 4-6 d. The malting process is typically initiated by immersing the dry barley grain in water. This process is known as steeping where the objective is not only to clean the grain, but also to raise its moisture content to about 40-45% (w/w) so that the endosperm mobilization step that follows will occur more quickly. During steeping, the water is drained once to allow re-aeration of the grain. This step is known as the 'air rest' and is considered necessary, primarily because the submerged grain becomes starved of oxygen after about 16 h. After an 'air rest' of about 8 h, the grain is re-immersed in water to complete the steeping treatment over another 8-h period - or in a series of re-steeping steps. The two-step steeping process to increase the moisture content of the dry grain to 40%, or higher, takes about 32 h overall. In some malthouses, spray steeping techniques are used. The steeped grain is spread for germination, during which enzymes secreted from aleurone and scutellar epithelial cells - together with some that pre-exist in the starchy endosperm cells - degrade cell walls, starch and protein. Under normal conditions of germination, the phytohormone gibberellic acid (GA) is believed to be synthesized in the nodal region, or elsewhere in the embryo, from where it diffuses along the water gradient (Fincher, 2011).

The maltster usually aims to rapidly induce synthesis of as many of the starch-degrading enzymes in the grains as possible. In many commercial malting programs, GA is added to speed up the process of enzyme secretion from the aleurone layer. The starch-degrading enzymes - which include α- and β-amylases, starch debranching enzymes and α-glucosidases - partially depolymerize the starch reserves of the grain to monosaccharides, oligosaccharides, and glucose (Smith et al., 2005; regarding said β-amylases, it is notable that these are deposited in the starchy endosperm during grain development). The depolymerization products of starch are subsequently used by yeast cells as a carbon source and are fermented into beer ethanol. Diastatic power is a malting quality parameter that refers to activity levels of the battery of starch degrading enzymes, with high values desirable for brewing.

Other major components of the barley grain include storage proteins, which are also found in the dead starchy endosperm cells and include hordeins as well as water and salt soluble proteins. Depolymerization of these also begins naturally in the malting process, but the brewer may manage the degree of degradation of these proteins so that sufficient peptides and amino acids are released to support yeast growth during the subsequent germination step in the brewery. However, if degradation of storage proteins proceed too much, the released proteins can cause difficulties in the brewing process. In particular, high levels of released soluble protein can precipitate and form undesirable haze in the final beer product or increase potential for Strecker aldehyde formation during storage of beer. In specifications of malting quality, an adequate level of free amino nitrogen (FAN) is desirable for yeast growth during fermentation. The Kolbach Index is a measure of the soluble: total protein ratio, with malt giving rise to an adequate Kolbach index generally preferred. The extent of protein degradation is therefore an ongoing challenge for the maltster. In addition to the beer precipitation problem that can be associated with excessive extracted proteins, very high FAN levels can also lead to difficulties, through the potential for off-flavour formation.

Maltsters also try to induce high levels of enzymes that degrade cell wall polysaccharides in the barley grain, in particular the (1,3;1,4)-β-glucans and arabinoxylans. Incompletely degraded (1,3;1,4)-β-glucans can be especially troublesome for brewers, because these can be extracted from the malt in soluble forms that form highly viscous aqueous solutions that slow filtration processes in the brewery and contribute to undesirable haze in the final beer. Thus, low levels of soluble (1,3;1,4)-β-glucan represent an important malting quality parameter, while high levels of (1,3;1,4)-β-glucanase enzymes remain important measures of malt quality. Following the controlled germination steps, the wet malt is dried from about a moisture content of 40% to 4-to-5%. This drying process, termed kilning, is very energy consuming and represents a major cost for the industry. The entire process including kiln drying is typically 6-7 days.

The kiln-drying has been considered an important part of beer production for multiple reasons. One important reason is that during germination, rootlets (also referred to as "culms") are formed. The rootlets have a bitter taste, which affects the aftertaste of beer, and furthermore, the rootlets may add undesirable color to beer (see Beer Brewing Technology (1999): 183, published by Shokuhin Sangyo Shimbun as well as US9,326,542). Once green malt has been kiln-dried, the rootlets can easily be removed e.g. using a deculmer. According to the general textbook on "Malts and Malting" by D.E. Briggs then "culms must be removed [...] since they are extremely hydroscopic, rich in soluble nitrogenous substances, contain poorly flavoured and bitter substances and can be rich in sulphur dioxide and/or nitrosamines. Deculming should be carried out soon after the malt is stripped from the kiln to help cool it and before the rootlets pick up moisture from the air, become slack and pliable (less brittle) and therefore, more difficult to break and separate" (D.E. Briggs, Malts and Malting; p695 First Edition, 1998 Published by Blackie & Professionals, London, ISBN0 412 29800).

Kiln-dried malt generally has a moisture level of 4.5-5.0%. The kiln-dried malt is subsequently transported from the malthouse to the brewery by road, rail or sea. This relates to the fact that processes of malting and brewing have traditionally been undertaken at different locations and often by different corporate entities.

In the brewery, the kiln-dried malt is milled to break open the grain, and the resulting content is extracted with hot water in a process known as mashing. The extracted material includes partially degraded starch, protein and cell wall molecules as described above, and these are further degraded by endogenous grain enzymes that were extracted from the malt. At this stage, some brewers add additional - and generally cheaper carbon sources (adjuncts) - to support the subsequent yeast fermentation process and to offset the higher costs of malt. Said adjuncts can be barley, rice, wheat or other cereal flours from un-germinated grain, but their addition may necessitate the concomitant addition of hydrolytic enzymes, because there are insufficient endogenous enzymes in the malt to degrade the components of the adjunct. The added enzymes are usually from unpurified and relatively cheap extracts of fungal and/or bacterial cultures. The addition of exogenous enzymes is not legal in some countries, particularly where beer must be produced under tightly regulated settings.

Further degradation of the starch, and other endosperm components extracted in hot water, proceed in a process known as saccharification. Following mashing, the extracts are filtered, often in a lauter tun, and cooled. The extract may be boiled in the presence of hops or hop extracts, and upon cooling, yeast cultures are added for the fermentation of released sugars to ethanol. The beer so produced is usually matured and filtered before bottling. The beer may also be carbonated prior to bottling.

GB 1 121 394 dicloses an enzymatic production of wort concentrates for kvass ("kvass‴ being a Russian beer) and other beers, from unmalted rye or barley, or freshly germinated rye or barley malt, instead of the dry malts used in the conventional processes. WO 2011/127372 A1 discloses a method for improving yield in the malting process comprising: applying conditioned water to germinating cereal grain in the germination stage of the malting process, wherein the conditioned water comprises from 0.025% to 2% chloride salt. The malting process comprises three stages: steeping, germination, and kilning. During the steeping the barley kernels are immersed in water which may or may not be aerated.

### Summary

The instant invention provides methods for fast germination and preparation of aqueous extracts of cereals. The methods significantly speed up the process of preparing wort for production of cereal-based beverages, while maintaining the potential for preparing said wort with high levels of fermentable sugars, preferably with low levels of β-glucan and xylan. In particular, the beverages prepared from said wort may be characterized by a low level of astringent taste.

One aspect of the present invention relates to a method for producing an aqueous extract of a cereal, according to claim 11.

In one embodiment, the step of germination may be performed for in the range of 72 to 108h, such as for approximately 96h. Alternatively, the step of germination may be performed for in the range of 65 to 80 h, such as approximately 72h.

The duration of germination is measured from the initiation of germination, and the initiation of germination is the time point at which barley with a water content of less than 15% is contacted with sufficient water to initiate germination.

Following the step of germination, the methods of the present invention comprise a step of finely dividing the germinated cereal grains. A particularly interesting aspect of the invention is that the methods of the invention allow proceeding with finely dividing the germinated cereal grains immediately after the germination. Accordingly, the methods in general do not comprise a step of drying the germinated cereal grains. In particular, the methods do not comprise a step of kiln drying the germinated cereal grains. As described above, one important aspect of kiln drying is to allow easy removal of rootlets. Prior to drying removal of rootlets is difficult to achieve. However, the germinated cereal grains prepared according to the methods of present invention have significantly reduced rootlets (typically less than 6 g per 100 g germinated barley (dry weight)), and as shown by the present invention, the step of kiln drying is not required in respect of cereal germinated according to the methods of the invention. The germinated cereal grains may for example be finely divided by subjecting the germinated cereal grains to wet milling, followed by a step of preparing an aqueous extract, for example, by mashing at a predetermined temperature for any suitable time as described herein below in the section "Preparing an aqueous extract". The conversion of released saccharides, e.g. polysaccharides, and proteins can be facilitated during mashing by the addition of mixtures of exogenous enzymes that catalyze the degradation of starch, storage proteins and cell wall polysaccharides. The enzymes can be partially purified from barley itself, from malt or from other sources - or, alternatively, from fungal and/or bacterial enzyme mixtures that can be purchased from commercial sources.

The invention may thereby provide for significant water savings through the elimination of drying of the malt as well as significant energy savings e.g. by omission of the kiln drying step. In addition, the total time required for preparing an aqueous extract of cereal grains may be significantly reduced. Energy cost savings of up to 50% can be achieved through the fast methods of the invention, which may greatly reduce the carbon footprint of the industry. This is of importance because of world-wide, increasing legislative and taxation pressures in most countries to reduce carbon footprints of the malting and brewing industries.

Further in the context of sustainability, the present invention allows the entire production of beer to be performed in already-existing brewery equipment, so that little additional capital expenditure is required.

The invention is further defined in the claims attached hereto.

### Description of Drawings

**Figure 1** shows a schematic presentation of an example of a micromalting process.
**Figure 2** shows water uptake of barley mutant and reference grains during malting.
**Figure 3** shows root growth of barley grains during malting. Root growth was also measured in a sample which was imbibed in water under aeration for 24h and subsequently germinated in air for 24h (24+24).
**Figure 4** show expression of genes encoding hydrolytic enzymes in mutant and reference mature barley grains (0) and in green malt at days 1,2,3,4,5,6 days as well as in the kilned malts (7 day). Enzyme activity was also measured in a sample which was imbibed in water for 24h and subsequently germinated in air for 24h (24+24).
**Figure 5** shows α -amylase (a), β-amylase (b) and free limit dextrinase (c) activities measured in mutant and reference grains during malting.

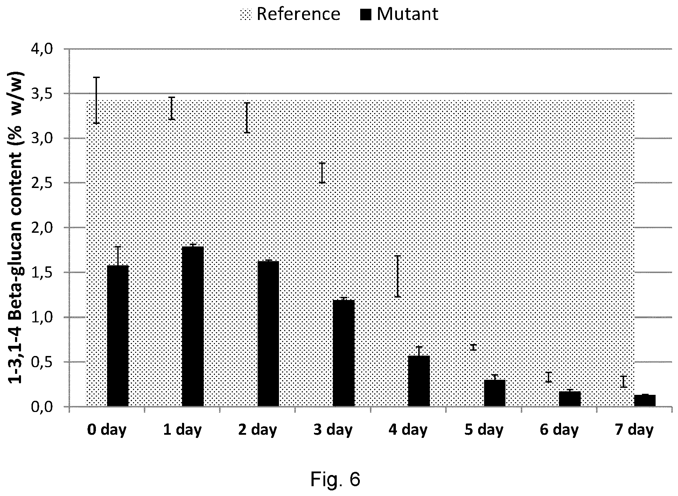

**Figure 6** shows (1-3;1-4)-β-glucan content in mutant and reference mature barley grains (0 day) and in green malt at 1,2,3,4,5,6 days as well as in the kilned malts. (7 day)

### Definitions

As used herein, "a" can mean one or more, depending on the context in which it is used.

The term "approximately" and "about" when used herein in relation to numerical values preferably means ±10%, more preferably ±5%, yet more preferably ±1%.

The term "amino acid" as used herein refers to a proteinogenic amino acid. Preferably, the proteinogenic amino acid is one of the 20 amino acids encoded by the standard genetic code. The IUPAC one and three letter codes are used to name amino acids.

The term "amino acid corresponding to X" is used herein to describe amino acids of a given polypeptide (e.g. a mutant CsIF6 polypeptide) in relation to amino acids of a reference polypeptide (e.g. CsIF6 of SEQ ID NO:1). Following alignment between said polypeptide and the reference polypeptide, an amino acid is corresponding to X if it is in the same position as X in said alignment.

By "encoding" or "encoded", in the context of a specified nucleic acid, is meant comprising the information for translation into the specified protein. A nucleic acid or polynucleotide encoding a protein may comprise non-translated sequences, e.g. introns, within translated regions of the nucleic acid, or may lack such intervening non-translated sequences, e.g. in cDNA. The information by which a protein is encoded is specified by the use of codons.

The term "gene" means the segment of DNA involved in producing a polypeptide chain; it includes regions preceding and following the coding region (promoter and terminator). Furthermore, plant genes generally consist of exons interrupted by introns.

"Mutations" include deletions, insertions, substitutions, transversions, and point mutations in the coding and noncoding regions of a gene. Deletions may be of the entire gene, or of only a portion of the gene. Point mutations may concern changes of one base pair, and may for example result in premature stop codons, frameshift mutations, mutation of a splice site or amino acid substitutions. A gene comprising a mutation may be referred to as a "mutant gene". If said mutant gene comprises a mutation and thereby encodes a polypeptide with a sequence different to the wild type, said polypeptide may be referred to as a "mutant polypeptide".

The term "adjunct" as used herein refers to carbon-rich raw material sources added during preparation of beer. The adjunct may be an ungerminated cereal grain, which may be milled together with the germinated grains prepared according to the invention. The adjunct may also be a syrup, sugar or the like.

The term "chit" as used herein refers to the embryonic growing bud that is visible during the germination phase of a cereal grain.

The term "water content" of a grain as used herein refers to the % of H₂O w/w in said grain.

The term "germinated grain" as used herein refers to grains having developed a visible chit, preferably a chit of at least 1 mm, such as of at least 2 mm, and a visible stem.

The term "initiation of germination" as used herein refers to the time point at which barley grains with a water content of less than 15% is contacted with sufficient water to initiate germination.

The term "β-glucan" as used herein, unless otherwise specified, refers to the cereal cell wall polymer "(1,3;1,4)-β-glucan".

The term "(1,3;1,4)-β-glucan synthase" as used herein should be regarded as any enzyme which catalyses the synthesis of (1,3;1,4)-β-glucan and, optionally, catalyses the polymerisation of glucopyranosyl monomers. For example the (1,3;1,4)-β-glucan synthase may be a polypeptide encoded by a CsIF gene or a functional homolog thereof.

Similarly, the term "xylan" as used herein, unless otherwise specified, refers to the cereal cell wall polymer "arabinoxylan".

The terms "kiln dried malt" and "kilned malt" as used herein refer to germinated cereal grains, which have been dried by kiln drying.

The term "steeping" as used herein refers to the process of increasing the water content of a cereal kernel.

The term "β-glucanase" as used herein refers to enzymes with the potential to depolymerize cereal β-glucan. Accordingly, unless otherwise specified, the term "β-glucanase" refers to an endo- or exo-enzyme or mixture thereof characterized by (1,3;1,4)-β- and/or (1,4)-β-glucanase activity.

The term "xylanase" as used herein refers to enzymes with the potential to degrade main and side chains of xylan and arabinoxylan. Accordingly, unless otherwise specified, the term "xylanase" refers to an enzyme or an enzyme mixture characterized by enzymic activities derived by one or more of the following enzyme classes: endo-1,4-xylanase; exo-1,4-xylanase; arabinofuranosidase; ferulic acid esterase.

Enzyme activities of cereal grains as used herein refer to the activities measured in flour prepared from the specified grain type. For example, 10 U/g of α-amylase activity per gram cereal grain refers to said α-amylase activity (10 U) measured in an aqueous extract derived from 1 g of flour (dry matter) from said cereal. α-amylase activity is determined by K-CERA 01/12 (protocol and kit available from Megazyme, Ireland). β-amylase activity is determined by the K-BETA3 (protocol and kit available from Megazyme, Ireland). Limit-dextrinase activity is determined by the T-LDZ1000 (protocol and kit available from Megazyme, Ireland).

The volume of a gas as indicated herein refers to the volume of said gas at 1 atm and 20°C.

The volume of O₂ as indicated herein refers to the volume of O₂ at 1 atm and 20°C. In embodiments of the invention where O₂ is comprised in a mixture of gasses, then the total volume of the gas mixture may be determined, and the volume of O₂ may be calculated as the percentage of the total volume constituted by O₂. By way of example then atmospheric air comprises 21% O₂. Thus the volume of O₂ within atmospheric air as used herein is 21% of the total volume of atmospheric air.

### Detailed description

### Cereal grains

The methods of the present invention comprise a step of germination of a cereal grain.

The cereal grains are barley grains. Said grains may be grains of any barley variety, such as any of the barley varieties described herein below in the section "Barley".

The cereal grains may have a relatively low water content before germination. For example, the cereal grains may have a water content of at the most 30%, preferably at the most 20%, such as at the most 15%, for example in the range of 5 to 15%.

Before germination, the cereal grain may have been subjected to one or more steps of antimicrobial treatment. Said antimicrobial treatment may be any useful antimicrobial treatment, which does not impair the grains potential for germination. The antimicrobial treatment could for example be treatment with one or more antimicrobial agents. Said antimicrobial agents may be any antimicrobial agent, which at the concentrations used is not toxic to cereal grains. For example, the antimicrobial agent may be a chlorine containing compound, e.g. hypochlorite. The antimicrobial agent may also be peroxide, e.g. hydrogen peroxide and/or peracetic acid. Non-limiting examples of useful commercial antimicrobial agents include P3-Hypochloran^{®}, P3-peroxysan^{®} or P3-oxonia active 150^{®}. Cereal grains may be treated with hypochloran at a concentration in the range of 0.1 to 10%, such as in the range of 0.5 to 5%, for example approximately 1%, such as 1%. The cereal grains may be treated with said hypochloran for in the range of 15 min to 10 h, such as in the range of 1 to 5 h, for example for in the range of 2 to 4 h. After treatment, the cereal grains may be washed one or more times.

In some embodiments of the invention, the antimicrobial treatment is performed by incubating cereal grains in an aqueous solution comprising the antimicrobial agent, and thus the antimicrobial treatment may be performed as part of a steeping step. Immediately after said incubation, the step of germination may be initiated. Thus, in such embodiments, it is not required to change the aqueous solution, and the same aqueous solution may be used for the antimicrobial treatment and a steeping step. This may in particular be the case, when the antimicrobial agent is a peroxide, e.g. hydrogen peroxide.

It may be preferred that said cereal grains have not been subjected to germination prior to the step of germination according to the invention. Accordingly, it may be preferred that the cereal grains have not been subjected to a step of pre-germination.

Some cereal grains comprises a hull, whereas other cereal grains are hull-less. Hulled cereal grains may be treated to remove at least part of the hull prior to the step of germination. In general, treatment of remove hull is not required if a hull-less cereal grain is used. Hull-less cereals include for example hull-less barley varieties and wheat.

Hulled cereal grains may be treated to remove hull by subjecting the cereal grains to physical treatment removing hull. Said physical treatment may for example be selected from the group consisting of polishing, sanding, peeling and smoothening. Preferably, the physical treatment results in a loss of the hull. Loss of the hull may be determined as an overall weight loss. Thus, the physical treatment preferably leads to a loss of at least 2%, such as in the range of 2 to 7%, preferably loss of at least 3%, such as in a loss of in the range of 3 to 6% of the total weight of the cereal grains.

### Barley

In some embodiments, the barley plant may comprise one or more specific characteristics, for example, one or more of the characteristics as described herein below. Even though the various characteristics are discussed individually herein below, the barley plant of the invention may have a combination of these characteristics.

In one embodiment of the invention, the barley may be a hull-less barley variety (var.). It is also comprised within the invention that the barley is a barley var. with naturally thin husk, such as var. Admiral. For example, the husk may constitute less than 7% of the total weight of grain and husk.

The barley plant may also be a barley plant having a low level of LOX activity. Such barley plants are known in the art, and include, for example, barley plants carrying a mutation in the gene encoding LOX-1. For example, the barley plant may be a barley plant carrying any of the mutations in the LOX-1 gene described in WO 02/053721, WO 2005/087934 and WO 2004/085652.

The barley plant may also be a barley plant carrying a mutation in the gene encoding lipoxygenase 1 (LOX-1) and/or in the gene encoding LOX-2. For example, the barley plant may be a barley plant carrying any of the mutations in the LOX-1 and LOX-2 genes described in WO 2010/075860.

The barley plant may also be a barley plant having a low level of MMT activity. Such barley plants are known in the art and include, for example, barley plants carrying a mutation in the gene encoding MMT. Specifically, the barley plant may be a barley plant carrying any of the mutations in the MMT gene described in WO 2010/063288. The barley plant may also be any of the barley plants described in WO 2011/150933.

The barley plant may also be a barley plant characterised by increased GA signalling. In particular, the barley plant may be a barley plant carrying a mutation in the *Slender1* gene, which encodes the DELLA protein. For example, the barley plant may be a barley plant carrying any of the mutations described by Chandler et al., 2013, e.g. in Table 1 therein. For example, the barley plant may carry a mutation in the *Slender1* gene resulting in a mutant *Slender1* gene encoding a mutant DELLA protein, wherein said mutant DELLA protein carries a mutation in one or more of amino acids number 46, 490, 280, 268, 271, 277, 231, 481, 282, 277, 227, 485 or 237, for example a mutation selected from the group consisting of G46E, S490F, R268H, G271D, A277T, V231M, R481H, V282F, A277T, G227E, S485F and C237Y. The amino acid numbering is provided in relation to the sequence of the DELLA protein available under the Genbank accession no. AK372064 or AF035820 (version as of 4 February 2013).

### Barley plants with low level of β-glucan

The barley plant to be used with the methods of the invention is characterized by having a β-glucan level in the grains of in the range of 1-3% w/w on a dry weight basis.

In one embodiment the barley plant to be used with the methods of the invention carry a mutation in any gene encoding a β-glucan synthase. Said gene may for example be a gene encoding the polypeptide of SEQ ID NO:2 set forth in US2012/0030784. For example, the barley plant may be a barley comprising a β-glucan-deficient gene as set forth in SEQ ID NO:1 or SEQ ID NO:18 of US2012/0030784.

In one embodiment, the barley plant to be used with the methods of the invention may be carrying a mutation in the *CslF6* gene resulting in a reduced (1,3;1,4)-β-glucan content. The sequence of a wild type cellulose synthase-like CsIF6 polypeptide sequence from barley *Hordeum vulgare* cultivar Sloop is provided herein as SEQ ID NO:1. The sequence of a wild type cellulose synthase-like CsIF6 (CsIF6) complete coding sequence from barley *Hordeum vulgare* cultivar Sloop is provided herein as SEQ ID NO:2. In addition to the sequence provided herein as SEQ ID NO:1, wild type CslF6 polypeptide may also have the sequence of SEQ ID NO:1, wherein the amino acid at position 590 has been replaced by Thr. Thus, a polypeptide of SEQ ID NO:1 carrying a A590T polymorphism may also be considered a wild type CsIF6 polypeptide (Taketa et al. (2012)).

In one embodiment, the barley plant carries a mutation in the CsIF6 gene. The mutation may be a mutation affecting the expression level of either CsIF6 mRNA and/or CsIF6 protein. In one embodiment, the mutation may be a mutation resulting in said mutated *CslF6* gene encoding a mutant CsIF6 polypeptide. The mutation in the *CsIF6* gene may be any mutation of the CsIF6 gene, for example a deletion, an insertion or a point mutation. In one embodiment of the invention the mutation is a point mutation in the coding region of the *CslF6* gene. In one embodiment the mutation results in a premature stop codon. The mutant CslF6 polypeptide encoded by said mutant CsIF6 gene may be any mutant CsIF6 polypeptide. In particular, the mutant CsIF6 polypeptide may comprise a substitution of one amino acid in any one of the membrane localised domains of CsIF6. The mutant CslF6 polypeptide may preferably comprise one or more of the following substitutions in a membrane localised domain:
- substitution of a non-polar amino acid for a charged amino acid; and
- substitution of a polar amino acid for a non-polar amino acid.

In one embodiment of the invention, the mutant CsIF6 polypeptide may comprise a substitution of one amino acid in any one of the membrane localised domain of CsIF6. The membrane localised domains of CsIF6 are shown herein in Table 1.

**Table 1. Localization of membrane localized amino acid sequences in the CsIF6 protein**

| **AA position in SEQ ID NO:1** | **AA sequence** | **Functionality** |
|---|---|---|
| 109-128 | RVLIFVRLIAFTLFVIWRIS | Membrane spanning |
| 137-158 | LWVTSICGEFWFGFSWLLDQLP | Membrane spanning |
| 700-711 | LQRVAYINITTY | Part of membrane spanning |
| 712-714 | PTF | Helix linker in membrane giving kink |
| 715-731 | AIFLIFYTTVPALUFVT | Part of membrane spanning |
| 741-758 | TMFYVYLGIVLSTLLVIA | Membrane spanning |
| 835-857 | ITPIIIIFVNIIGSAVAFAKVLD | Membrane spanning |
| 864-882 | LKVAGGVFFNFWVLFHLYPF | Membrane spanning |

For example the mutant CsIF6 polypeptide may be CsIF6 of SEQ ID NO:1 except that the mutant CsIF6 comprises a substitution of amino acid 847 to a charged amino acid. For example said substitution may be a substitution of glycine (G) in position 847 for a negatively charged amino acid, e.g. Glu or Asp. Preferably, the mutant CsIF6 polypeptide may be CsIF6 of SEQ ID NO:1 except that the mutant CsIF6 comprises a substitution of amino acid 847, wherein said substitution is substitution of the glycine (G) in position 847 for a glutamic acid (E). In addition, said mutant CsIF6 may optionally carry a A590T polymorphism.

For example the mutant CsIF6 polypeptide may be CsIF6 of SEQ ID NO:1 except that the mutant CsIF6 comprises a substitution of amino acid 748 to a charged amino acid. For example said substitution may be a substitution of glycine (G) in position 748 for a negatively charged amino acid, e.g. Glu or Asp. Preferably, the mutant CsIF6 polypeptide may be CsIF6 of SEQ ID NO:1 except that the mutant CsIF6 comprises a substitution of amino acid 748, wherein said substitution is substitution of the glycine (G) in position 748 for a aspartic acid (D). In addition, said mutant CsIF6 may optionally carry a A590T polymorphism.

For example the mutant CsIF6 polypeptide may be CsIF6 of SEQ ID NO:1 except that the mutant CsIF6 comprises a substitution of amino acid 709 to a non-polar amino acid. For example said substitution may be a substitution of threonine (T) in position 709 for a non-polar amino acid, e.g. Leu or Ile. In addition, said mutant CsIF6 may optionally carry a A590T polymorphism.

Preferably, the mutant CsIF6 polypeptide may be CsIF6 of SEQ ID NO:1 except that the mutant CsIF6 comprises a substitution of amino acid 709, wherein said substitution is substitution of the threonine (T) in position 709 for a isoleucine (I).

The mutant CslF6 polypeptide may also be a fragment of the full length CsIF6 polypeptide. For example, the mutant CsIF6 polypeptide may be CsIF6 of SEQ ID NO:1 except that the mutant CsIF6 gene comprises a premature stop codon thus encoding a truncated CsIF6 polypeptide. Preferably, the mutant CsIF6 polypeptide may be encoded by a mutant CsIF6 gene, wherein the mutant CsIF6 gene is of SEQ ID NO:2 except that the mutant CsIF6 gene comprises a substitution of nucleotide guanine (G) in position 2028 of the coding sequence to adenine (A) thereby creating a stop codon. The resulting mutant CsIF6 polypeptide thereby comprises a substitution of threonine (T) in position 676 to a stop codon (T676Stop). In addition, said mutant CsIF6 may optionally carry a A590T polymorphism.

The barley plant may be carrying any mutation in the CsIF6 gene. Such mutation could for example result in silencing of the CsIF6 gene, leading to barley grains with very low levels of (1,3;1,4)-β-glucan (as described by Taketa et al., 2011). The barley plant may also be the m351 mutant (as described by Hu et al. (2014)) comprising a mutation in the CsIF6 gene which results in very low levels of (1-3,1-4) β-glucan (<1.6%).

The barley plant may also be carrying a mutation in any other gene, such as a regulatory gene, resulting in a low level of β-glucans.

### Germination

The methods of the present invention comprise a step of germination of cereal grains comprising one or more steps of steeping of said cereal grains.

The cereal grains may be any of the cereal grains described herein above in the sections "Cereal grains", "Barley" and "barley plants with low level of β-glucan" .

The step of germination may comprise one or more steps of steeping of said cereal grains and one or more steps of germinating said cereal grains. The steps of steeping and germination may also be combined or partly combined, so that steeping and germination occurs simultaneously or at least partly simultaneously.

Prior to initiation of germination the methods may also comprise an initial step of peeling said cereal grains, as described above in section "cereal grains". Said peeling may be beneficial for enhancing water uptake by the cereal grains and subsequent induction of germination, as well as for removing potential microorganisms on the surface of the cereal grains. In addition or as an alternative, microorganisms on the cereal grains may also be removed prior to germination by subjecting the cereal grains to one or more steps of antimicrobial treatment, as described above in section "cereal grains".

Steeping may be performed by any conventional method known to the skilled person. The steeping is performed in order to increase the water content of the grains and thereby initiate germination. Steeping typically comprises one or more steps of incubating cereal grains in wet conditions, e.g. by submerging cereal grains in an aqueous solution.

One non-limiting example involves steeping with alternating dry and wet conditions. The steeping may be performed at any useful temperature, for example at a temperature in the range of 10 to 25°C, such as at approx. 15°C.

During steeping, for example, the cereal grains may be incubated wet for in the range of 30 min to 10 h followed by incubation dry for in the range of 30 min to 24h and optionally repeating said incubation in wet and/or dry in the range of 2 to 5 times. The final water content after steeping may, for example, be in the range of 40 to 50%.

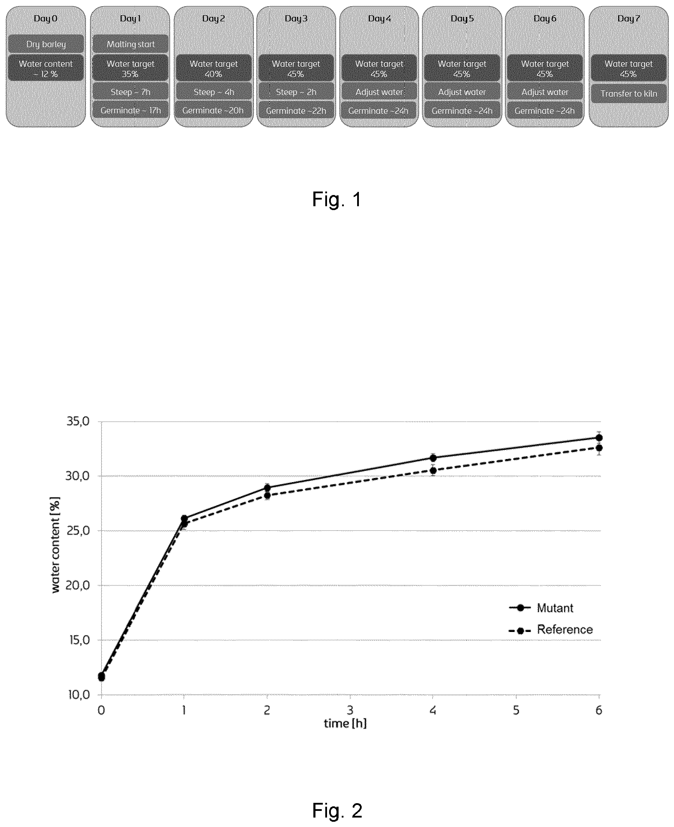

Another non-limiting example involves steeping, wherein the cereal grains are incubated wet to obtain a water content of in the range of 32 to 37%, such as about 35%. Such wet incubation may for example be for in the range of 5 to 12h, such as in the range of 5 to 10h, followed by incubation dry for in the range of 12 to 30h, such as in the range of 15 to 20h. The cereal grains may then incubated wet to obtain a water content of about 37 to 43%, such as of approx. 40%. This may be achieved by wet incubation for in the range of 2 to 10h, such as in the range of 3 to 7h. The wet incubation may be followed by another dry incubation for in the range of 10 to 30h, such as in the range of 15 to 25h. Finally, the cereal grains may be incubated wet in order to achieve a water content of in the range of 43 to 47%, such as about 45%. This may be achieved by wet incubation for in the range of 1 to 10h, for example in the range of 1 to 5h. A non-limiting example of a steeping process is outlined in Figure 1.

In one embodiment said steeping or said wet incubation may be performed at least partly under aeration. Thus, said cereal grains may be incubated in an aqueous solution with an airflow, e.g. while O₂ is passed through the aqueous solution. The airflow may for example be any of the airflows described below. In another embodiment, said steeping is performed in the absence of aeration.

Germination of grains may be performed by any conventional method known to the skilled person. One non-limiting example involves germination at a temperature in the range of 10 to 25°C, for example in the range of 13 to 18°C, optionally with changing temperature, for in the range of 1 to 4 days. During germination, the cereal grains may be subjected to moist conditions in order to maintain a desired water content, for example a water content of in the range of 40 45%.

In addition, cereal grains may be subjected to an air-flow during germination, for example as described in more detail below.

A non-limiting example of germination is shown in Figure 1. Said moist conditions may be obtained by spraying of an aqueous solution onto said cereal grains. The moist conditions may also be obtained by passing a flow of moist air through the germinating cereal grains.

Said airflow may be any adequate airflow, which may support germination. The skilled person will be able to determine an adequate airflow e.g. based on Briggs et al., 1998 or on Kunze, 2014, Technology Brewing and Malting. The airflow may be flow of any gas comprising or even consisting of O₂. In one embodiment, the airflow may be at least 2 L, preferably at least 3 L, more preferably at least 4 L, yet more preferably at least 5 L, even more preferably at least 6 L O₂ per kg cereal grains per h. The weight of said cereal grains is the dry weight. For example, the airflow may be in the range of 2 to 100 L, for example in the range of 2 to 75 L, such as in the range of 2 to 50 L, for example in the range of 4 to 100 L, for example in the range of 4 to 75 L, such as in the range of 4 to 50 L, for example in the range of 6 to 100 L, for example in the range of 6 to 75 L, such as in the range of 6 to 50 L O₂ per kg cereal grains (dry weight) per h. The airflow may frequently be in the form of atmospheric air. Thus, the airflow may be at least 10 L, preferably at least 15 L, more preferably at least 20 L, yet more preferably at least 25 L, even more preferably at least 30 L atmospheric air per kg cereal grains per h. The weight of said cereal grains is the dry weight. For example, the airflow may be in the range of 10 to 500 L, for example in the range of 10 to 375 L, such as in the range of 10 to 250 L, for example in the range of 20 to 500 L, for example in the range of 20 to 375 L, such as in the range of 20 to 250 L, for example in the range of 30 to 500 L, for example in the range of 30 to 375 L, such as in the range of 30 to 250 L atmospheric air per kg cereal grains (dry weight) per h.

The step of germination is performed for in the range of 48 to 108h. In one embodiment, the step of germination is performed for in the range of 72 to 108h, such as for approximately 96h. In one embodiment, the step of germination is performed for in the range of 65 to 80 h, such as approximately 72h.

The duration of germination is measured from the initiation of germination, and the initiation of germination is the time point at which barley with a water content of less than 15% is contacted with sufficient water to initiate germination. For example, the duration of germination may be measured from the initiation of germination and until the start of finely dividing the germinated cereal grains.

In some embodiments, after germination of the cereal grainsthe cereal grains have a water content of at least 30%, preferably at least 35%, more preferably of at least 40%, for example in the range of 40 to 45%.

The water content of cereal grains may be determined by determining the weight of the cereal grains, followed by drying said cereal grains and determining the weight of the dried cereal grains. The difference in weight of the wet and dry cereal grains is considered to be water, and the water content is provided as the weight of the water divided by the total weight of the cereal grains (wet cereal grains). The water content may also be determined by comparing the weight of the cereal grains before the initiation of germination to the weight of the cereal grains during or after germination, wherein the germinated cereal grains have been subjected to a short centrifugation in order to remove any surface water. The water content provided in % is thus a w/w %.

The germination of the cereal grains may be performed at any useful temperature.. However, it may be preferred that the cereal grains are germinated at a temperature of at least 10°C. In particular, the cereal grains may be germinated at in the range of 10 to 25°C, preferably in the range of 12 to 25°C, such as in the range of 15 to 20°C.

In some embodiments one or more exogenous enzymes may be added during the step of germination e.g. as described in WO2016/071463. The germination process may optionally be shortened by the addition of one or more compound capable of accelerating the germination. For example, the phytohormone gibberellic acid (GA) may be added - either from the onset or during incubation. GA 'activates' gene expression in its target cells, namely the aleurone and the scutellar epithelium of the barley grain, including genes encoding endogenous enzymes necessary for the hydrolysis of starch, storage proteins and cell wall polysaccharides.

The cereal grains are preferably finely divided essentially immediately after germination. Accordingly, the methods of the invention do preferably not comprise a step of drying between the step of germination and finely dividing the cereal grains. It is preferred that the method of the invention does not comprise a step of kiln-drying said germinated cereal grains.

### Germinated cereal grains

The invention relates to a method comprising a step of producing germinated cereal grains.

The germinated cereal grains preferably comprise one or more hydrolytic enzyme activities, for example provided by α-amylases, β-amylases, starch debranching enzymes (such as limit dextrinases), α-glucosidases and proteases.

Frequently, the onset of hydrolytic enzyme activity may be occurring in a timely coordinated manner, and thus the activity of some hydrolytic enzymes may be used as a marker for other hydrolytic enzyme activities.

Accordingly, it is preferred that the germinated cereal grains have an adequate level of measurable α-amylase activity. Preferably, the germinated cereal grains have a measurable α-amylase activity of at least 30 U/g, such as at least 50 U/g, for example at least 100 U/g cereal grain (dry weight). The α-amylase activity is preferably determined according to standard methods, e.g. by using the Ceralpha kit (K-CERA) from Megazyme, Ireland. In particular, the α-amylase activity may be determined as described in Example 5 below.

It may also be preferred that the germinated cereal grains have an adequate level of measurable β-amylase activity. Preferably, the germinated cereal grains have a measurable β-amylase activity of at least 5 U/g, such as at least 10 U/g cereal grain (dry weight). Preferably, the β-amylase activity is determined according to standard methods, e.g. by using the Betamyl kit (K-BETA3) from Megazyme, Ireland. In particular, the β-amylase activity may be determined as described in Example 5 below.

It is also preferred that the germinated cereal grains have an adequate level of limit dextrinase activity. Preferably, the germinated cereal grains have a limit dextrinase activity of at least 2 mU/g, such as at least 5 U/g, for example at least 10 U/g, such as for example at least 20 U/g cereal grain (dry weight). Preferably the limit dextrinase activity is determined according to standard methods, e.g. by using the Limit Dextrizyme kit T-LDZ1000 from Megazyme, Ireland. In particular, the limit dextrinase activity may be determined as described in Example 5 below.

Interestingly, the germinated cereal grains according to the invention have significantly reduced rootlets compared to conventional green malt. Thus, the germinated cereal grains according to the invention preferably contains at the most 10 g rootlets per 100 g germinated barley, such as at the most 8 g rootlets per 100 g germinated barley, preferably at the most 6 g rootlets per 100 g germinated barley, even more preferably at the most 4 g rootlets per 100g germinated barley, wherein both the mass of the rootlets and the mass of the germinated barley is provided as dry weight. The mass of rootlets is preferably determined as described in Example 3 below.

As mentioned above, it is preferable that the aqueous extract obtained during mashing has a viscosity sufficiently low to allow good filterability of the mash mixture. As also described in detail above, soluble β-glucans may contribute to high viscosity of an aqueous extract. Filterability may frequently be dependent on the level of β-glucan. Accordingly, it may be preferred that the level of β-glucan in the germinated cereal grains is not too high.

Preferably, the germinated cereal grains have a β-glucan content below 3% w/w, such as below 2% w/w, for example below 1.5% w/w, preferably below 1.0% w/w on a dry weight basis.

### Finely dividing germinated cereal grains

The methods of the invention comprise a step of finely dividing germinated cereal grains.

At the time that said cereal grains are finely divided they still have a water content of at least 20%, for example not less than 25%, such as not less than 30%, preferably not less than 35%, for example not less than 40%. For example, the germinated cereal grains may be transferred directly from germination to the equipment for finely dividing cereal grains. Accordingly, the germinated cereal grains may have the same water content at the time of being finely divided as the cereal grains have immediately after germination, for example the water content described herein above in the section "Germination". In particular, the methods do in general not comprise a step of drying the germinated cereal grains by subjection to elevated temperatures. The germinated cereal grains do not have a water content of less than 20%, for example not less than 25%, such as not less than 30%, preferably not less than 35%, for example not less than 40% at any time after germination and prior to finely dividing said cereal grains. Thus, the methods do preferably not comprise a step of kiln drying the germinated cereal grains.

The germinated cereal grains may be finely divided using any equipment suitable for finely dividing cereal grains having a water content of more than 20%, for example not less than 25%, such as not less than 30%, preferably not less than 35%, even more preferably not less than 40%, yet more preferably not less than 45%. For example, the germinated cereal grains may be subjected to milling, for example wet milling. Useful mills for milling germinated cereal grains include the mills available from Millstar, USA. The germinated cereal grains may also be subjected to grinding.

The cereal grains are, generally, finely divided to an extent so that an aqueous extract of the fermentable sugars of the cereal grains can be made. Thus, the cereal grains are sufficiently divided, such that a 7-L aqueous extract of 1 kg of said finely divided cereal grains has a specific gravity of at least 8°Plato.

In embodiments of the invention, wherein the aqueous extract is made from the germinated cereal grains and one or more adjuncts, said adjuncts may also be finely divided. In particular, this may be the case when said adjuncts comprise ungerminated cereal grains. Said adjuncts may be finely divided, e.g. milled in separate proceedings. However, it is also comprised within the invention that the adjuncts are finely divided together with the germinated cereal grains. Similarly, if the aqueous extract is made from the germinated cereal grains and kiln dried malt, then said kiln dried malt may be finely divided, e.g. milled in separate proceedings. However, it is also comprised within the invention that the kiln dried malt is finely divided together with the germinated cereal grains.

### Preparing an aqueous extract

The methods of the invention also comprise a step of preparing an aqueous extract of the finely divided germinated cereal grains. Said step may, for example, be a step of mashing.

The aforementioned aqueous extract may, in general, be prepared by incubating the finely divided cereal grains in water or in an aqueous solution, herein also referred to as "mashing solution". The mashing solution may be any aqueous solution, but it typically consists of water, such as tap water to which one or more additional agents may be added. In order to distinguish between additional agents added during germination, these additional agents may be referred to as "additional mashing agents". Thus, the mashing solution may consist of water (e.g. tap water) to which one or more additional mashing agents are added. The mashing agents may be present in the mashing solution from the onset or they may be added during the process of preparing an aqueous extract.

Said additional mashing agents may be enzymes. Thus, the mashing solution may comprise one or more enzymes. Said enzymes may be added to the mashing solution from the onset, or subsequently, during the process.

Said enzymes may, for example, be one or more hydrolytic enzymes. Suitable enzymes include lipases, starch degrading enzymes (e.g. amylases), glucanases [preferably (1-4)- and/or (1,3;1,4)-β-glucanases], and/or xylanases (such as arabinoxylanases), and/or proteases, or enzyme mixtures comprising one or more of the aforementioned enzymes, e.g. Cereflo, Ultraflo, or Ondea Pro (Novozymes). For example, the mashing solution may comprise one or more hydrolytic enzymes wherein at least one hydrolytic enzyme is selected from the group consisting of α-amylase, β-amylase, limit dextrinase, pullulanase, β-glucanase, xylanase, glucoamylase and protease.

In one embodiment of the invention the mashing solution comprises one or more of the following enzymes:
- A β-glucanase, such as an endo-(1,3;1,4)-β-glucanase or an endo-1,4-β-glucanase.
- A xylanase, such as an endo- or exo-1,4-xylanase, an arabinofuranosidase or a ferulic acid esterase
- An α-amylase
- A pullulanase or a limit dextrinase
- A glucoamylase.

Whether or not to add enzymes to the mashing solution, and decisions on which enzymes to add, may dependent on the cereal grains used. As the cereal is a barley plant with low levels of β-glucan (e.g. as described herein above in the section "Barley"), then little or no β-glucanase may be added to the mashing solution.

In one embodiment it is preferred that no exogenous protease is added during mashing. Addition of protease may be less preferable, because proteases may affect enzyme activity. In one embodiment it is preferred that no exogenous lipase is added during mashing.

In one embodiment it is preferred that at the most 700 U, preferably at the most 350U exogenous glucoamylase per g germinated cereal grains (dry matter) is used during preparation of the aqueous extract.

In one embodiment it is preferred that at the most 400 AGU, preferably at the most 200 AGU exogenous glucoamylase per kg germinated cereal grains (dry matter) is used during preparation of the aqueous extract. Determination of AGU may be performed as described in US7060468.

In another embodiment it is preferred that the combined exogenous glucoamylase and α-amylase used during preparation of the aqueous extract does not exceed 700U, preferably does not exceed 350U per g germinated cereal grains (dry matter). The combined glucoamylase and α-amylase activity may for example be determined using K-CERA 01/12 (protocol and kit available from Megazyme, Ireland).

In one embodiment it is preferred that at the most 20 U exogenous pullulanase or limited dextrinase per kg germinated cereal grains (dry matter) is used during preparation of the aqueous extract.

In one embodiment it is preferred that at the most 100 PUN pullulanase per kg germinated cereal grains (dry matter) is used during preparation of the aqueous extract. Determination of PUN may be performed as described in US7060468.

Said additional mashing agents may also be adjuncts, for example ungerminated cereal grains, syrups or sugars. If adjuncts are added, these may also have been finely divided e.g. by milling or grinding. If the adjunct is a cereal grain, for example a cereal grain, which has not been subjected to germination, then it may typically be finely divided or milled. If the adjunct is syrups, sugars or the like, these will generally not be milled. Adjunct such as sugars or syrups may be added to the mashing solution at any time in the process; however, such adjuncts may also be added to the aqueous extract or later during the process for preparing a beverage as described below. In general, the adjuncts are added in smaller quantities than the germinated cereal grains. Thus, at least 50%, preferably at least 70%, for example at least 90% of the carbohydrates of the aqueous extract are derived from the germinated cereal grains, whereas adjuncts preferably only accounts for a minor part of the carbohydrates. If the adjunct is an ungerminated cereal grain, then it is preferred that the germinated cereal grains constitutes at least 50% (w/w), preferably at least 70% (w/w), more preferably at least 90% (w/w) of the total cereal grains as determined per dry weight.

The additional mashing agents may also be kiln dried malt. If kiln dried malt is added, it may also have been finely divided e.g. by milling or grinding. In general, the kiln dried malt is added in smaller quantities than the germinated cereal grains. Thus, the germinated cereal grains (i.e. germinated cereal grains, which have not been kiln dried) constitute at least 80% (w/w), preferably at least 90% (w/w), more preferably at least 95% (w/w) of the total cereal grains and malt as determined per dry weight. In preferred embodiments, no kiln dried malt is added.

Said additional mashing agents, preferably of food grade quality, may also be a salt, for example CaCl₂.

Said additional mashing agents may also be an acid, preferably a food grade acid, for example H₃PO₄.

The aqueous extract is generally prepared by incubation of the finely divided germinated cereal grains in the mashing solution at one or more predetermined temperature(s). Said predetermined temperature may also be referred to as "mashing temperature" herein. Said mashing temperatures may for example be conventional temperatures used for mashing.

The mashing temperature is in general either kept constant (isothermal mashing), or gradually increased, for example increased in a sequential manner. In either case, soluble substances in the finely divided germinated cereal grains are liberated into said mashing solution thereby forming an aqueous extract.

The mashing temperature(s) are typically temperature(s) in the range of 30 to 90°C, such as in the range of 40 to 85°C, for example in the range of 50 to 80°C. The mashing temperatures may be chosen according to the cereal type used. Accordingly, in embodiments of the invention, wherein the cereal grains are barley with low levels of or absent lipoxygenase (LOX) activity and/or methyl methionine transferase (MMT) activity (see details herein below in the section "Barley"), the mashing temperature may be lower, for example in the range of 35 to 69°C.

Incubation in the mashing solution may be performed for any suitable amount of time. The time for incubation in the mashing solution in the mashing vessel may, e.g., be for in the range of 60 to 300 min, such as in the range of 60 to 240 min, for example in the range of 90 to 300 min. such as in the range of 90 to 240 min, for example in the range of 90 to 270 min. For example said time for incubation in the mashing solution may be any time used in conventional mashing. One non-limiting example of a suitable mashing is:
(1) Mashing-in at a temperature in the range of 50-60°C, such as approximately 55°C, in the range of 10 to 30 min, such as approximately 15 min.
(2) Heating to a temperature in the range of 60 to 70°C, preferably in the range of 60 to 65°C, such as approximately 62°C, in the range of 30 to 90 min, such as approximately 60 min.
(3) Heating to a temperature in the range of 70 to 75°C, such as approximately 72°C, in the range of 5 to 30 min, such as approximately 15 min.
(4) Heating to a temperature in the range of 75 to 80°C, preferably in the range of 75 to 78°C, such as approximately 78°C, in the range of 5 to 15 min, such as approximately 10 min.

Subsequent to incubation in the mashing solution in the mashing vessel, the finely divided germinated cereal grains in the mashing solution may be transferred to another container, e.g. a lauter tun and incubated for additional time at elevated temperature, e.g. at in the range of 70 to 78°C for in the range of 30 to 120 min.

Thus, the incubation in the mashing solution may in addition to aforementioned steps also comprise a step (5) of:
(5) Heating to a temperature in the range of 70 to 78°C, preferably in the range of 75 to 78°C, such as approximately 78°C, in the range of 30 to 120 min, such as approximately 60 min.

Non-limiting examples can be found in the literature of brewing, e.g. in Briggs et al. (supra) and Hough et al. (supra).

After incubation in the mashing solution, the aqueous extract may typically be separated, e.g. through filtration into the aqueous extract and residual non-dissolved solid particles, the latter also denoted "spent grain". Filtering may for example be performed in a lauter tun. Alternatively, the filtering may be filtering through a mash filter. The aqueous extract thus obtained may also be denoted "first wort".

Additional liquid, such as water may be added to the spent grains during a process also denoted sparging. After sparging and filtration, a "second wort" may be obtained. Further worts may be prepared by repeating the procedure.

Thus, the aqueous extract may be wort, e.g. a first wort, a second wort, a further wort or a combination thereof.

### Aqueous extract

The aqueous extract prepared by the methods of the invention may have a number of useful properties, including - but not limited to - the properties described in this section.

As mentioned above, the aqueous extract may be subjected to a step of filtration. Accordingly, it may be preferred that the wort has good filterability. For example, it may be technically challenging to filter highly viscous liquid - a reason that it may be preferred that the aqueous extract has a low viscosity.

Filterability may be determined in a number of ways. In one embodiment the filterability is determined as the amount of liquid obtained after filtration through a filter funnel equipped with a filter paper for 1 h. In one embodiment, the aqueous extract may have a filterability of at least 250 mL, when 400 mL mashing solution comprising 100 g finely divided cereal grains is added to said filter funnel. Filterability may also be determined as the percentage of the volume of liquid obtained after filtration for 60 min as described above compared to the volume of liquid of the aqueous extract added to said funnel. Thus, in one embodiment, the filterability may for example be at least 50%, such as of at least 60% (v/v). In particular, filterability may be determined as described in Example 3 of international patent application PCT/EP2017/065498.

Filterability may frequently be dependent on the level of β-glucan. Accordingly, it may be preferred that the level of β-glucan is not too high. For example, in one embodiment the aqueous extract may comprise at the most 200 mg/L, preferably at the most 150mg/L β-glucan.

### Method for producing an aqueous extract of cereal grains

In one embodiment, the invention relates to a method for producing an aqueous extract of a cereal, according to claim 11.

In one embodiment, the step of germination is performed for in the range of 72 to 108h, such as for approximately 96h. In one embodiment, the step of germination is performed for in the range of 65 to 80 h, such as approximately 72h.

The duration of germination is measured from the initiation of germination. And the initiation of germination is the time point at which barley with a water content of less than 15% is contacted with sufficient water to initiate germination.

In one embodiment, the end of germination may be the start of finely dividing the germinated grains.

### Preparing beverages

In some embodiments, the methods of the invention also comprise a step of processing the aqueous extract prepared by the methods of the invention into a beverage.

The aqueous extract may be boiled with or without hops where after it may be referred to as boiled wort.

First, second and further worts may be combined, and thereafter subjected to heating or boiling. The aqueous extract may be heated or boiled for any suitable amount of time, e.g. in the range of 60 min to 120 min. During heating or boiling the volume of the aqueous extract may be reduced due to evaporation. It may be preferred that the volume of the aqueous extract is reduced by less than 8%, preferably by less than 5%. This may reduce energy consumption significantly.

The beverage may be prepared by fermentation of the aqueous extract, e.g. by fermentation of wort. Thus, the beverage may be prepared by fermentation of the aqueous extract with yeast.

In one embodiment, the beverage may be an alcoholic beverage, such as beer. In other embodiments, the beverage may be a non-alcoholic beverage based on germinated cereal grains. The non-alcoholic beverage, may for example be a non-alcoholic beer or other kinds of non-alcoholic beverages, such as maltina.

In one preferred embodiment the beverage is beer. Thus, the beer may for example be selected from the group consisting of Altbier, Amber ale, Barley wine, Berliner weisse, Bière de Garde, Bitter, Blonde Ale, Bock, Brown ale, California Common, Cream Ale, Dortmunder Export, Doppelbock, Dunkel, Dunkelweizen, Eisbock, Fruit lambic, Golden Ale, Gose, Gueuze, Hefeweizen, Helles, India pale ale, Kölsch, Lambic, Light ale, Maibock, Malt liquor, Mild, Märzenbier, Old ale, Oud bruin, Pale ale, Pilsener, Porter, Red ale, Roggenbier, Saison, Scotch ale, Steam beer, Stout, Schwarzbier, lager, Witbier, Weissbier and Weizenbock. In a preferred embodiment of the invention, the beer is a light coloured beer, such as a lager beer, a pale ale or a weissbeer. The aqueous extract according to the invention is prepared from germinated cereal grains, which have not been subject to kiln drying. Germinated cereal grains, which have not been kiln dried, generally have a lighter colour, and accordingly, the methods of the invention are particularly useful for preparation of lighter beers, in particular for preparation of lager beer. Darker beers may also be prepared by the methods of the invention, e.g. by adding one or more kiln dried malts during mashing as described in the section "Preparing beverages".

Thus, the invention also relates to methods of producing a beverage according to claim 1.

Alcoholic beverages - such as beer - may according to the methods of the invention be manufactured from germinated cereal grains. Germinated cereal grains, in addition to hops and yeast, contributes to flavour and colour of the beer.

Once the aqueous extract has been prepared it may be processed into beer by any method including conventional brewing methods. Non-limited descriptions of examples of suitable methods for brewing can be found, for example, in publications by Briggs et al. (1981) and Hough et al. (1982). Numerous, regularly updated methods for analyses of barley and beer products are available, for example, but not limited to, American Association of Cereal Chemists (1995), American Society of Brewing Chemists (1992), European Brewery Convention (1998), and Institute of Brewing (1997). It is recognized that many specific procedures are employed for a given brewery, with the most significant variations relating to local consumer preferences. Any such method of producing beer may be used with the present invention.

The first step of producing beer from the aqueous extract preferably involves heating said aqueous extract as described herein above, followed by a subsequent phase of cooling and optionally whirlpool rest. One or more additional compounds may be added to the aqueous extract, e.g. one or more of the additional compounds described below in the section "Additional compounds". After being cooled, the aqueous extract may be transferred to fermentation tanks containing yeast, e.g. brewing yeast, such as S. pastorianus or S. cerevisiae. The aqueous extract may be fermented for any suitable time period, in general in the range of 1 to 20, such as 1 to 10 d. The fermentation is performed at any useful temperature e.g. at a temperature in the range of 10 to 20°C. The methods may also comprise addition of one or more enzymes, e.g. one or more enzymes may be added to the wort prior to or during fermentation. In particular, said enzyme may be a proline-specific endoprotease. A non-limiting examples of a proline-specific endoprotease is "Brewer's Clarex" available from DSM. In other embodiments, no exogenous enzymes are added during the methods.

During the several-day-long fermentation process, sugar is converted to alcohol and CO₂ concomitantly with the development of some flavour substances. The fermentation may be terminated at any desirable time, e.g. once no further drop in %P is observed.

Subsequently, the beer may be further processed, for example chilled. It may also be filtered and/or lagered - a process that develops a pleasant aroma and a less yeast-like flavour. Additives may also be added. Furthermore, CO₂ may be added. Finally, the beer may be pasteurized and/or filtered, before it is packaged (e.g. transferred to containers or kegs, bottled or canned). The beer may also be pasteurized by standard methods.

The beer produced by the methods of the invention typically have a pleasant taste, and lacks or only have little astringency. Taste may be analyzed, for example, by a specialist beer taste panel.

### Beverage

Beverages prepared by processing an aqueous extract according to the invention into a beverage may have a number of useful properties, including - but not limited to - the properties described in this section.

It is generally desirable that the beverages according to the invention contain as little diacetyl as possible. Accordingly, it may be preferred that the beverage comprises diacetyl at a level, which is below the threshold considered off-flavor in lager beer. Preferably, the beverage comprises at the most 30 ppb diactyl, more preferably at the most 25 ppb diacetyl, even more preferably at the most 20 ppb diacetyl. This is in particular the case if the beverage is beer, for example lager beer.

The beverage may for example be an aqueous extract as described herein, which optionally has been fermented. Thus, the beverage may comprise or consist of said aqueous extract or fermented aqueous extract and optionally one or more additional compounds. Said additional compounds may for example be any of the additional compounds described herein below in the section "Additional compounds".

### Additional compounds

The methods of the invention may comprise the step of adding one or more additional compounds. Said additional compounds may for example be a flavor compound, a preservative, a functional ingredient, a color, a sweetener, a pH regulating agent or a salt. The pH regulating agent may for example be a buffer or an acid, such as phosphoric acid.

Functional ingredients may be any ingredient added to obtain a given function.

Preferably a functional ingredient renders the beverage healthier. Non-limiting examples of functional ingredients includes vitamins or minerals.

The preservative may be any food grade preservative, for example it may be benzoic acid, sorbic acid, sorbates (e.g. potassium sorbate), sulphites and/or salts thereof. The additional compound may also be CO₂. In particular, CO₂ may be added to obtain a carbonated beverage.

The flavour compound to be used with the present invention may be any useful flavour compound. The flavour compound may for example be selected from the group consisting of aromas, plant extracts, plant concentrates, plant parts and herbal infusions. In particular the flavor compounds may be hops.

### Sequences

>SEQ ID NO: 1, Cellulose synthase-like CsIF6 sequence (based on GenBank number NCBI: EU267181.1)
>SEQ ID NO: 2, Hordeum vulgare cellulose synthase-like CsIF6 (CsIF6), complete cds (based on GenBank number NCBI: EU267181.1)

**Table 1: Primer and probe sequence information of genes analysed**

| | | | | |
|---|---|---|---|---|
| **AMY1** | Fwd | GGGTCATGCAGGGATATG | SEQ ID NO: 3 | Amplifies several alpha amylase 1 transcripts including (HORVU6Hr1G078330.1; HORVU6Hr1G078360.1; HORVU6Hr1G078420.1; HORVU6Hr1G080790.1; HORVU0Hr1G032700.1) |
| | Rev | CCCAGTCGAAGAAATGATC | SEQ ID NO: 4 | |
| | Probe (FAM) | TACATCCTCACGCACCCAG | SEQ ID NO: 5 | |
| **BGL2** | Fwd | TACCAGAACCTGTTCGAC | SEQ ID NO: 6 | Amplifies several (1-3;1-4)-β-glucanase transcripts including |
| | Rev | ACACCACCAGCTTCAC | SEQ ID NO: 7 | |
| | Probe (FAM) | ACCGTGGACGCCTTCTAC | SEQ ID NO: 8 | (HORVU7Hr1G120450.1; HORVU1Hr1G057680.1) |
| **AGL97** | Fwd | GAGTCGCCGGAGATG | SEQ ID NO: 9 | Amplify transcript of high pl alpha-glucosidase HORVU7Hr1G106540.2 |
| | Rev | GACTTCACCTTGATGGC | SEQ ID NO: 10 | |
| | Probe (FAM) | | SEQ ID NO: 11 | |
| **LD** | Fwd | CTTCGATGGGGTTTGAAC | SEQ ID NO: 12 | Amplify transcript of limit dextrinase HORVU7Hr1G027860.4 |
| | Rev | CCGATTTCCTCACCAAAG | SEQ ID NO: 13 | |
| | Probe (FAM) | | SEQ ID NO: 14 | |
| **RefA** | Fwd | GTCTATTGCTTCCTCTGC | SEQ ID NO: 15 | HORVU5Hr1G041120 |
| | Rev | GATGACCGAAGCCTTAAC | SEQ ID NO: 16 | |
| | Probe (HEX) | TGCGGGCGGCTATCAAA | SEQ ID NO: 17 | |

### Examples

### Example 1: Micromalting

Barley samples were processed in triplicates, 50 g each sample. Samples placed in stainless steel beakers were steeped, according to the scheme presented in figure 1, as a forced submission in 15°C fresh water for about 7 hours on the first day, 3 hours on the second day and one hour on the third day, as to reach a water content of 35%, 40% and 45%, respectively, at the end of each steeping. After each steeping, the stainless steel beakers containing the samples were moved to a germination box at 15°C and kept there until the following step in the process. At the end of the last drainage of steeping water, samples were kept for 120 hours (Days 3-7) in germination boxes equilibrated to 45% water and sprayed to overcome respiration water loss.

At the end of the germination process (Day 7), samples were kiln dried in the stainless steel boxes into a Termaks incubator for 21 hours using the following temperature ramp program:
25 °C - 55°C (2°C/hrs)
55 °C - 85°C (4°C/hrs)
85°C for 1.5 hours

The steps of germination and kiln-drying were performed with a recirculating airflow of 80% fresh air.

At the end of each micromalting day, samples were collected for analyses, in triplicate, and freeze dried for 48 hours.

Two barley lines were studied using this germination process, one regular barley line cv. Paustian (reference) and one barley line having a low β-glucan content (mutant). The barley line having a low β-glucan content is a barley plant of cv. Paustian, which carries a mutation in the *CslF6* gene resulting in a mutant *Cslf6* gene encoding a mutant *CslF6* polypeptide carrying a Gly→Asp mutation at position 748. The wild type sequence of barley CsIF6 polypeptide (SEQ ID NO: 1) is available under the NCBI accession number EU267181.1 in the GenBank database.

### Example 2: Water uptake

Water uptake speed during the first 6 hours of germination was determined by measuring the exact weight differences of the cereal grains compared to the starting weight after a quick centrifugation of the beakers to remove surface water.

### Results:

The water uptake of the mutant during the first 6 hours of imbibition appeared slightly faster that the reference (Figure 2).

### Example 3: Root growth

A sample of the germinated barley was freeze dried following each germination day, as described in example 1. The freeze dried sample was weighed and the formed rootlets were manually removed and the germinated barley was weighed again. Root growth was calculated as percentage of the weight before and after the treatment.

### Results:

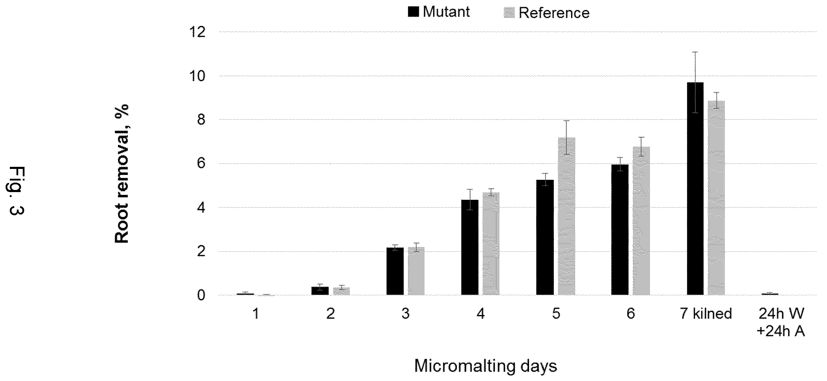

The root growth of the mutant and the reference was similar throughout the malting period but significantly lower at day four compared to the kilned malt (Figure 3).

### Example 4: Expression of genes encoding hydrolytic enzymes during malting RNA isolation:

For each sample, a 2 mL Eppendorf tube containing two metal balls were prepared. Approximately 80 mg of freeze dried flour was weighed out into the Eppendorf tubes containing metal balls. The samples were pre-wetted with 100 µL RNase-free water followed by addition of 1 mL of Tri-Reagent. The samples were subsequently shaken vigorously. After 5 min incubation at room temperature the samples were centrifuged at 12,000 × g for 10 min at 4 °C. The supernatant was decanted into a 2mL PhaseLock tube (spun down 30s, Qiagen # 129056) and 0.2 mL of chloroform was added. The tube was shaken vigorously by hand for 10-15 sec to mix chloroform and Tri-Reagent. The samples were incubated for 5-15 min at room temperature and then centrifuged at 12,000 × g for 5 min at 4 °C. The aqueous phase of the sample was decanted into a new Eppendorf tube and 500 µL 2-propanol was added. The RNA was precipitated in freezer overnight. The sample was centrifuged at 12,000 × g for 5 min at 4 °C and the isopropanol supernatant was removed. For RNA clean-up, the pellet was re-suspended directly in 350 µL lysis buffer of the Aurum Total RNA mini kit (BioRad #7326820). 350 µL 70 % ethanol was added to re-precipitate the RNA. The solution was transfered to the RNA binding column placed in a 2mL cap-less wash tube (provided in kit) and centrifuged for 30 sec. The RNA binding column was removed and the filtrate discarded. 700 µL low stringency wash solution was added to the RNA binding column and centrifuged for 30 sec. The low stringency wash solution was discarded from wash tube and the binding column was re-placed in the same wash tube.

### On-column DNase treatment:

The provided lyophilized DNase I was reconstituted by adding 250 µL 10 mM Tris, pH 7.5 to the vial and pipetting up and down to mix according to the provided manual (Biorad Aurum Total RNA mini kit #7326820). 80 µL of diluted DNase I was added to the membrane stack at the bottom of each column and allowed to digest at RT for 15 min. 700 µL high stringency wash solution was added to the RNA binding column and centrifuged for 30 sec. The filtrate was discarded and the column was re-placed in the same wash tube. 700 µL low stringency wash solution was added to the RNA binding column and centrifuged for 30 sec. The filtrate was discarded and the column was re-placed in the same wash tube. The wash tube and column were centrifuge for an additional 2 min to remove residual wash solution. The RNA binding column was transferred to a 1.5 mL capped microcentrifuge tube and 80 µL elution buffer was added to the membrane stack at the bottom of the RNA binding column. The solution was allowed to saturate the membranes for 1 min before centrifugation for 2 min to elute the total RNA. Finally, the RNA concentration was quantified by NanoDrop

### (Thermo Scientific)

### cDNA synthesis and ddPCR setup:

cDNA was synthesized using the iScript^{™} cDNA Synthesis Kit from BioRad (#1708891). Prior to cDNA synthesis, total RNA concentration was estimated on NanoDrop (Thermo Scientific) and normalized to 50 ng/µL with RNase-free water. For cDNA synthesis, 200 ng RNA was used according to the following protocol:

| **cDNA synthesis component** | **Volume per reaction(µl)** |
|---|---|
| 5x iScript Reaction Mix | 4 |
| iScript Reverse Transcriptase | 1 |
| RNA template, 200 ng | 4 |
| Nuclease-free water | 11 |
| Total volume: | 20 |

For NoRT control samples, water was added instead of the reverse transcriptase (RT). The complete reaction mixture was incubated in a thermal cycler using the following protocol:

| **cDNA synthesis program** | |
|---|---|
| Priming | 5 min at 25 °C |
| Reverse Transcription | 20 min at 46 °C |
| RT inactivation | 1 min at 95°C |
| Hold | ∞ at 4 °C |

For ddPCR analysis, each sample was analysed for the gene of interest as well as one reference gene. ddPCR was performed using the QX200 Droplet Generator and QX200 Droplet Reader from BioRad according to manufacturer's instructions. In this case, HORVU5Hr1G041120, a cytosolic pyruvate kinase family protein which is stably expressed during germination, was used as a reference gene. Table 1 above in section "sequences" provides details on primers and probes.

Prior to analysis, the cDNA was diluted 20 times in water, and each reaction mix was set up according to the following protocol:

| **ddPCR reaction component** | | **1x** |
|---|---|---|
| ddPCR Supermix (no dUTP) | 1X | 11 |
| Probe FAM (20X) | *450nM*/*250nM* | 0.95 |
| Probe HEX (20X) | *450nM*/*250nM* | 0.95 |
| cDNA | x | 5 |
| Water | y | 4.1 |

Samples were mixed well in 96-well plates and centrifuged for 1 min at 4000 rpm before droplet generation (BioRad QX200^{™} Automated Droplet Generator). The droplet plate was incubated on a thermal cycler according to the following programme:

| **ddPCR PCR Program** | **Temp** | **Time** | **Ramp** | **Cycles** |
|---|---|---|---|---|
| Heated Lid | 105°C | | 2°C/sec | |
| Step 1 | 95°C | 10 min | | 1 |
| Step 2 | 94°C | 30 sec | | 40 |
| Step 3 | 55°C | 1 min | | |
| Step 4 | 98°C | 10 min | | 1 |
| Step 5 | 8°C | ∞ | | |

The presence of FAM and HEX positive droplets was detected on the BioRad QX200^{™} droplet reader and analysed using the Quantasoft software from BioRad. The threshold was set manually in the 2D plot and concentration values were subsequently exported to Excel for normalization to the chosen reference gene.

### Results:

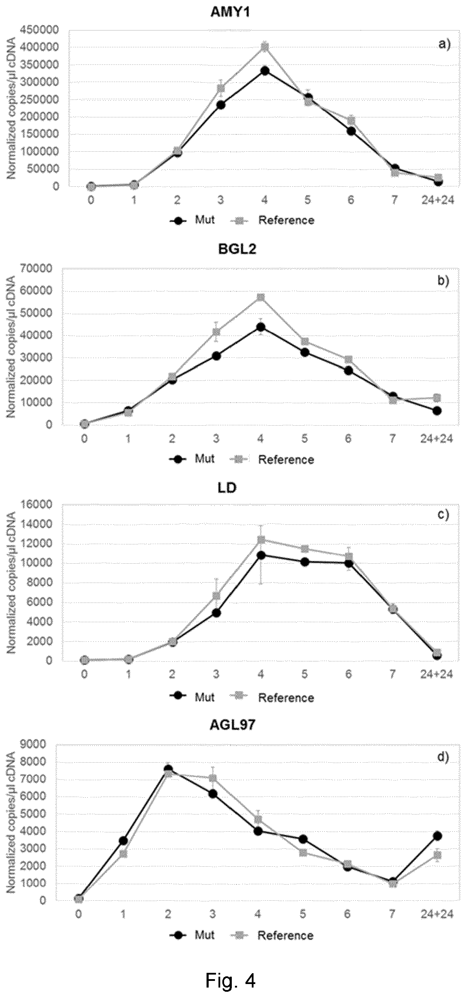

The expression of selected genes; amylase (AMY1), (1-3;1-4)-β-glucanase (BGL2), high pl alpha-glucosidase (AGL97) and limit dextrinase (LD) was analysed using ddPCR. AGL97 was expressed at highest level already at day 2 whereas the three other genes show maximum expression at day 4 (Figure 4). Both mutant and reference barley lines show similar expression pattern of the selected genes verifying optimal expression in the low (1-3;1-4)-β-glucan mutant also of genes encoding (1-3;1-4)-β-glucan degrading enzymes.

### Example 5: Hydrolytic enzyme activity in malt samples

Prior to enzyme activity analysis the malt samples were milled using a standard Foss Cyclotech mill equipped with a tungsten carbide grinding ring (Foss 10004463), nickel plated impeller (Foss 1000 2666) and a 1 mm outlet screen (Foss 10001989). All enzyme activity measurements of barley malt were made within 48 h after milling of the dry sample. Alpha-amylase activity assays were measured using a Ceralpha kit (K-CERA) from Megazyme using standard laboratory equipment. The amylase assays were made according to manufacturer's protocol (K-CERA 01/12). Calculation of amylase activity was based on the formula in the Megazyme protocol (K-CERA 01/12). Beta-amylase activity assays were measured using Betamyl kit (K-BETA3) from Megazyme using standard laboratory equipment. The amylase assays were made according to the manufacturer's protocol (K-BETA3 10/10). Calculation of beta-amylase activity was based on the formula in the Megazyme protocol (K-BETA3 10/10). Limit dextrinase activity assays were measured using a Pullulanase/Limit Dextrinase Assay kit (PullG6 Method) kit (K-PullG6) from Megazyme using standard laboratory equipment. The limit dextrinase assays were made according to manufacturer's protocol (K-PullG6 05/17). Calculation of limit dextrinase activity was based on the formula in the Megazyme protocol (K-PullG6 05/17).

### Results:

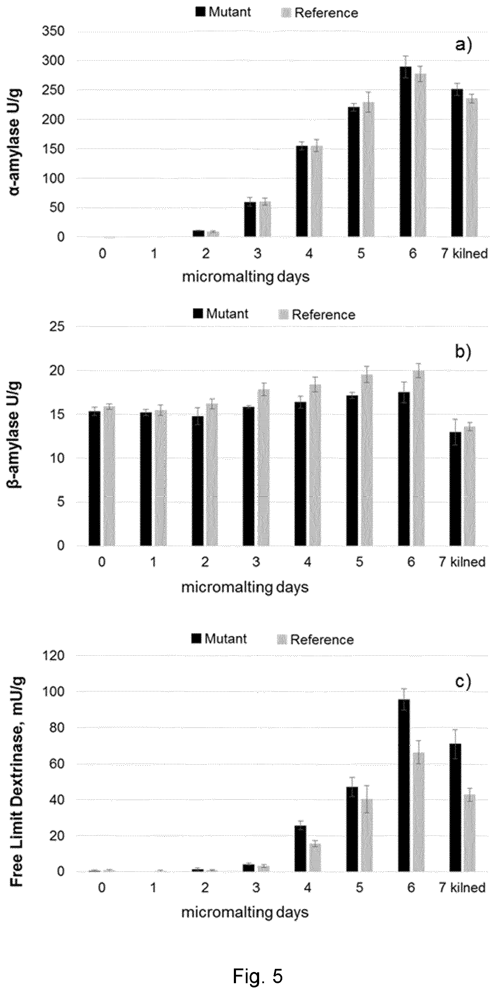

The total enzymatic activities measured for α-amylase, β-amylase and free limit dextrinase follow the same pattern in mutant and reference barley lines (Figure 5). Surprisingly, the limit dextrinase activity appear to be slightly higher in the mutant starting as early as day 3, although the limit dextrinase gene expression was slightly lower (Figure 4).

### Example 6: (1-3;1-4)-β-glucan content

The germinated grains were analysed for total (1,3;1,4)-β-glucan content. Ten mL barley grains were milled on a Retch cyclone mill. All samples were analysed in triplicates. Twenty mg of flour was weight out in 2 mL Eppendorf tubes, heated for 2 hours at 100 °C in an oven followed by cooling to room temperature. In total, 500 µL 50% aqueous methanol was added and the samples were shaken at 1400 rpm for 1 hour. Following centrifugation at 16000 × g for 10 minutes, the supernatant was discarded and the samples dried overnight. Then 400 µLof 20 mM NaHPO₄ at pH 6.5 with 1U/mL lichenase (Megazyme, International, Ireland) was added per 10 mg flour and incubated at 50 °C for 2.5 hours. The sample was centrifuged at 16000 × g for 10 minutes and the supernatant was filtered through 0.45 µm filters and the released Glc-β-(1->4)-Glc-β-(1->3)-Glc (DP3) and Glc-β-(1->4)-Glc-β-(1->4)-Glc-β-(1->3)-Glc (DP4) oligomers were quantified by High-performance anion exchange chromatography with pulsed amperometric detection (HPAEC-PAD). The Glc-β-(1->4)-Glc-β-(1->3)-Glc (DP3) and Glc-β-(1->4)-Glc-β-(1->4)-Glc-β-(1->3)-Glc (DP4) oligomers were quantified with HPAEC-PAD using a Dionex ICS 5000+ DC system equipped with a 4 µm SA-10 column with 2x250 mm dimensions and a pre-column. Run conditions were 0.4 mL/min, column temperature 40°C, isocratic 100 mM NaOH eluent for 15 min. A standard for quantification was produced by 1 U/mL lichenase (Megazyme International, Ireland) digestion of known quantities of medium viscosity (1,3;1,4)-β-glucans (Megazyme International, Ireland) in 20 mM NaHPO₄ pH 6.5 assuming an equal molar PAD response ratio between DP3 and DP4. The total (1,3;1,4)-β-glucan content was calculated as the sum of the DP3 and DP4 oligomers.

### Results:

The (1-3;1-4)-β-glucan content of mutant and reference was monitored in barley and in green malt at days 1,2,3,4,5,6 of the malting procedure (Figure 1) as well as in the kilned malts (day 7 in figure 1). During the entire malting process, the (1-3;1-4)-β-glucan content of the mutant was only 50% of the reference and at day 5 the mutant (1-3;1-4)-β-glucan content was similar to reference kilned malt.

### References

D.E. Briggs, Malts and Malting; p695 First Edition, 1998 Published by Blackie & Professionals, London, ISBN0 412 29800
Chandler et al., Journal of Experimental Botany, Vol. 64, No. 6, pp. 1603-1613, 2013, doi:10.1093/jxb/ert022
Hough, J.S. et al. "Malting and brewing science. Volume II Hopped wort and beer." Chapman and Hall, New York, USA. ISBN 0412165902, 1982.
Hu G, Burton C, Hong Z and Jackson E (2014). A mutation of the cellulose-synthase-like (CsIF6) gene in barley (Hordeum vulgare L.) partially affects the b-glucan content in grains. Journal of Cereal Science 59, 189-195.
Wolfgang Kunze, Technology Brewing and Malting, Versuchs- u. Lehranstalt f. Brauerei, 2014 ISBN 3921690773, 9783921690772
Smith AM, Zeeman S.C, Smith SM (2005) Starch Degradation. Annual Review of Plant Biology 56: 73-98.
Taketa S, Yuo T, Tonooka T, Tsumuraya Y, Inagaki Y, Haruyama N, Larroque O and Jobling SA (2012). Functional characterization of barley betaglucanless mutants demonstrates a unique role for CsIF6 in (1,3;1,4)-β-D-glucan biosynthesis. J Exp Bot. 63(1):381-92.

## Claims

1. A method for producing a beverage, said method comprising the steps of:
i. preparing an aqueous extract by a method comprising the steps of:
a) providing grains of a cereal, wherein the cereal is barley **characterized by** a β glucan level in the grains of in the range of 1-3% w/w on a dry weight basis;
b) subjecting the cereal grains to a step of germination for in the range of 48 to 108h thereby obtaining germinated grains, wherein the duration of germination is measured from the initiation of germination, and wherein the initiation of germination is the time point at which barley with a water content of less than 15% is contacted with sufficient water to initiate germination, and wherein said step of germination comprises one or more steps of steeping of said cereal grains;
c) finely dividing said germinated grains, while said germinated grains have a water content of at least 20%; and
d) preparing an aqueous extract of said finely divided germinated grains,
with the proviso that said cereal grains do not have a water content below 20% at any time between steps b) and d),
thereby obtaining an aqueous extract of the cereal;
and
ii.processing said aqueous extract into a beverage.

2. The method according to claim 1, wherein step ii. comprises the steps of:
e) heating said aqueous extract optionally in the presence of hops or hops extract;
f) cooling the aqueous extract;
g) fermenting said aqueous extract with yeast, thereby producing a fermented beverage.

3. The method according to any one of the preceding claims, wherein the beverage is beer, for example a light colored beer, for example selected from the group consisting of lager beer and pale ale.

4. The method according to any one of the preceding claims, wherein the step of germination does not exceed 96h.

5. The method according to any one of the preceding claims, wherein the step of germination is performed for in the range of 72 to 108h, such as for approximately 96h.

6. The method according to any one of the preceding claims, wherein the germinated cereal grains have a water content of at least 20%, for example not less than 25%, such as not less than 30%, preferably not less than 35%, even more preferably not less than 40%, yet more preferably not less than 45%, at the time of finely dividing said cereal grains.

7. The method according to any one of the preceding claims, wherein the method does not comprise a step of kiln drying the germinated grains.

8. The method according to any one of the preceding claims, wherein the germinated grains contain at the most 10 g, such as at the most 8 g, for example at the most 6 g, preferably at the most 4 g rootlets (dry matter) per 100 g germinated cereal grains (dry matter).

9. The method according to any one of the preceding claims, wherein the cereal is a hulled barley, and wherein the method comprises a step of removing at least part of said hull prior to initiation of germination; or the cereal is a hull-less barley.

10. The method according to claim 9, wherein the barley is **characterized by** carrying a mutation in the gene encoding for CslF6.

11. A method for producing an aqueous extract of a cereal, said method comprising the steps of:
a. providing grains of a cereal, wherein the cereal is barley **characterized by** a β glucan level in the grains of in the range of 1-3% w/w on a dry weight basis;
b. subjecting the cereal grains to a step of germination for in the range of 48 to 108h thereby obtaining germinated grains, wherein the duration of germination is measured from the initiation of germination, and wherein the initiation of germination is the time point at which barley with a water content of less than 15% is contacted with sufficient water to initiate germination, and wherein said step of germination comprises one or more steps of steeping of said cereal grains;
c. finely dividing said germinated grains, while said germinated grains have a water content of at least 20%; and
d. preparing an aqueous extract of said finely divided germinated grains,
with the proviso that said cereal grains do not have a water content below 20% at any time between steps b) and d);
thereby producing an aqueous extract of the cereal.

12. The method according to claim 11, wherein steps a), b), c) and/or d) are as defined in any one of claims 1 to 10, and/or, wherein the grains provided in step a), and/or the germinated cereal grains, and/or the cereal, and/or the aqueous extract of the cereal are as defined in any one of claims 1 to 10.

13. The method according to any one of the preceding claims, wherein the step of germination does not comprise a step of submerging cereal grains in an aqueous solution under aeration.

14. The method according to any one the preceding claims wherein the step of germination comprises a step of steeping comprising
i. wet incubation for in the range of 30 min to 10h followed by dry incubation for in the range of 30 min to 24h, or
ii. wet incubation for in the range of 5 h to 12h followed by dry incubation for in the range of 12h to 30h.

## Patentansprüche

1. Verfahren zur Herstellung eines Getränks, wobei das Verfahren die Schritte umfasst:
i. Herstellen eines wässrigen Extrakts durch ein Verfahren umfassend die Schritte:
a) Bereitstellen von Körnern eines Getreides, wobei das Getreide Gerste ist, die durch einen ß-Glucangehalt in den Körnern im Bereich von 1-3 Gew.-% auf Trockengewichtsbasis gekennzeichnet ist;
b) Unterwerfen der Getreidekörner einem Keimungsschritt für im Bereich von 48 bis 108 h, wodurch gekeimte Körner erhalten werden, wobei die Keimdauer vom Beginn der Keimung an gemessen wird, und wobei der Beginn der Keimung der Zeitpunkt ist, zu dem Gerste mit einem Wassergehalt von weniger als 15 % mit ausreichend Wasser in Kontakt gebracht wird, um die Keimung einzuleiten, und wobei der Keimungsschritt einen oder mehrere Weichschritte der Getreidekörner umfasst;
c) Feinzerteilen der gekeimten Körner, während die gekeimten Körner einen Wassergehalt von mindestens 20 % aufweisen; und
d) Herstellen eines wässrigen Extrakts der fein zerteilten gekeimten Körner,
mit der Maßgabe, dass die Getreidekörner zu keinem Zeitpunkt zwischen den Schritten b) und d) einen Wassergehalt unter 20 % aufweisen,
wodurch ein wässriger Extrakt des Getreides erhalten wird;
und
ii. Verarbeiten des wässrigen Extrakts zu einem Getränk.

2. Verfahren nach Anspruch 1, wobei Schritt ii. die Schritte umfasst:
e) Erhitzen des wässrigen Extrakts optional in Gegenwart von Hopfen oder Hopfenextrakt;
f) Kühlen des wässrigen Extrakts;
g) Fermentieren des wässrigen Extrakts mit Hefe, wodurch ein fermentiertes Getränk hergestellt wird.

3. Verfahren nach einem der vorhergehenden Ansprüche, wobei das Getränk Bier ist, beispielsweise ein hellfarbiges Bier, beispielsweise ausgewählt aus der Gruppe bestehend aus Lagerbier und Pale Ale.

4. Verfahren nach einem der vorhergehenden Ansprüche, wobei der Keimungsschritt 96 h nicht überschreitet.

5. Verfahren nach einem der vorhergehenden Ansprüche, wobei der Keimungsschritt für im Bereich von 72 bis 108 h durchgeführt wird, beispielsweise für ungefähr 96 h.

6. Verfahren nach einem der vorhergehenden Ansprüche, wobei die gekeimten Getreidekörner zum Zeitpunkt des Feinzerteilens der Getreidekörner einen Wassergehalt von mindestens 20 %, beispielsweise nicht weniger als 25 %, beispielsweise nicht weniger als 30 %, vorzugsweise nicht weniger als 35 %, noch bevorzugter nicht weniger als 40 %, und am bevorzugtesten nicht weniger als 45 % aufweisen.

7. Verfahren nach einem der vorhergehenden Ansprüche, wobei das Verfahren keinen Darren-Trocknungsschritt der gekeimten Körner umfasst.

8. Verfahren nach einem der vorhergehenden Ansprüche, wobei die gekeimten Körner höchstens 10 g, beispielsweise höchstens 8 g, beispielsweise höchstens 6 g, vorzugsweise höchstens 4 g Wurzelkeime (Trockenmasse) pro 100 g gekeimte Getreidekörner (Trockenmasse) enthalten.

9. Verfahren nach einem der vorhergehenden Ansprüche, wobei das Getreide eine bespelzte Gerste ist und das Verfahren einen Schritt des Entfernens zumindest eines Teils der Spelze vor Einleitung der Keimung umfasst; oder das Getreide eine nackte Gerste ist.

10. Verfahren nach Anspruch 9, wobei die Gerste **dadurch gekennzeichnet ist, dass** sie eine Mutation im Gen trägt, das für CsIF6 kodiert.

11. Verfahren zur Herstellung eines wässrigen Extrakts eines Getreides, wobei das Verfahren die Schritte umfasst:
a. Bereitstellen von Körnern eines Getreides, wobei das Getreide Gerste ist, die durch einen ß-Glucangehalt in den Körnern im Bereich von 1-3 Gew.-% auf Trockengewichtsbasis gekennzeichnet ist;
b. Unterwerfen der Getreidekörner einem Keimungsschritt für im Bereich von 48 bis 108 h, wodurch gekeimte Körner erhalten werden, wobei die Keimdauer vom Beginn der Keimung an gemessen wird, und wobei der Beginn der Keimung der Zeitpunkt ist, zu dem Gerste mit einem Wassergehalt von weniger als 15 % mit ausreichend Wasser in Kontakt gebracht wird, um die Keimung einzuleiten, und wobei der Keimungsschritt einen oder mehrere Weichschritte der Getreidekörner umfasst;
c. Feinzerteilen der gekeimten Körner, während die gekeimten Körner einen Wassergehalt von mindestens 20 % aufweisen; und
d. Herstellen eines wässrigen Extrakts der fein zerteilten gekeimten Körner,
mit der Maßgabe, dass die Getreidekörner zu keinem Zeitpunkt zwischen den Schritten b) und d) einen Wassergehalt unter 20 % aufweisen;
wodurch ein wässriger Extrakt des Getreides hergestellt wird.

12. Verfahren nach Anspruch 11, wobei die Schritte a), b), c) und/oder d) wie in einem der Ansprüche 1 bis 10 definiert sind, und/oder wobei die in Schritt a) bereitgestellten Körner und/oder die gekeimten Getreidekörner und/oder das Getreide und/oder der wässrige Extrakt des Getreides wie in einem der Ansprüche 1 bis 10 definiert sind.

13. Verfahren nach einem der vorhergehenden Ansprüche, wobei der Keimungsschritt keinen Schritt des Untertauchens von Getreidekörnern in einer wässrigen Lösung unter Belüftung umfasst.

14. Verfahren nach einem der vorhergehenden Ansprüche, wobei der Keimungsschritt einen Weichschritt umfasst mit
i. Nassinkubation für im Bereich von 30 min bis 10 h, gefolgt von Trockeninkubation für im Bereich von 30 min bis 24 h, oder
ii. Nassinkubation für im Bereich von 5 h bis 12 h, gefolgt von Trockeninkubation für im Bereich von 12 h bis 30 h.

## Revendications

1. Procédé de production d'une boisson, ledit procédé comprenant les étapes consistant à :
i. préparer un extrait aqueux par un procédé comprenant les étapes consistant à :
a) fournir des grains d'une céréale, dans lequel la céréale est de l'orge **caractérisée par** un niveau de β-glucane dans les grains compris dans la plage de 1 à 3 % p/p sur une base de poids sec ;
b) soumettre les grains de céréale à une étape de germination pendant une durée comprise dans la plage de 48 à 108 h, obtenant ainsi des grains germés, dans lequel la durée de germination est mesurée à partir de l'initiation de la germination, et dans lequel l'initiation de la germination est le moment auquel de l'orge ayant une teneur en eau inférieure à 15 % est mise en contact avec suffisamment d'eau pour initier la germination, et dans lequel ladite étape de germination comprend une ou plusieurs étapes de trempage desdits grains de céréale ;
c) diviser finement lesdits grains germés, tandis que lesdits grains germés ont une teneur en eau d'au moins 20 % ; et
d) préparer un extrait aqueux desdits grains germés finement divisés, à la condition que lesdits grains de céréale n'ont pas une teneur en eau inférieure à 20 % à aucun moment entre les étapes b) et d),
obtenant ainsi un extrait aqueux de la céréale ;
et
ii. transformer ledit extrait aqueux en une boisson.

2. Procédé selon la revendication 1, dans lequel l'étape ii. comprend les étapes consistant à :
e) chauffer ledit extrait aqueux éventuellement en présence de houblon ou d'extrait de houblon ;
f) refroidir l'extrait aqueux ;
g) fermenter ledit extrait aqueux avec de la levure, produisant ainsi une boisson fermentée.

3. Procédé selon l'une quelconque des revendications précédentes, dans lequel la boisson est de la bière, par exemple une bière de couleur claire, par exemple sélectionnée dans le groupe constitué par bière lager et pale ale.

4. Procédé selon l'une quelconque des revendications précédentes, dans lequel l'étape de germination ne dépasse pas 96 h.

5. Procédé selon l'une quelconque des revendications précédentes, dans lequel l'étape de germination est réalisée pendant une durée comprise dans la plage de 72 à 108 h, telle qu'approximativement pendant 96 h.

6. Procédé selon l'une quelconque des revendications précédentes, dans lequel les grains de céréale germés ont une teneur en eau d'au moins 20 %, par exemple non inférieure à 25 %, telle que non inférieure à 30 %, de préférence non inférieure à 35 %, encore plus préférablement non inférieure à 40 %, et plus préférablement encore non inférieure à 45 %, au moment de la division fine desdits grains de céréale.

7. Procédé selon l'une quelconque des revendications précédentes, dans lequel le procédé ne comprend pas une étape de touraillage des grains germés.

8. Procédé selon l'une quelconque des revendications précédentes, dans lequel les grains germés contiennent au plus 10 g, tels qu'au plus 8 g, par exemple au plus 6 g, de préférence au plus 4 g de radicelles (matière sèche) pour 100 g de grains de céréale germés (matière sèche).

9. Procédé selon l'une quelconque des revendications précédentes, dans lequel la céréale est une orge vêtue, et dans lequel le procédé comprend une étape d'élimination d'au moins une partie de ladite balle avant l'initiation de la germination ; ou la céréale est une orge nue.

10. Procédé selon la revendication 9, dans lequel l'orge est **caractérisée par le fait qu'**elle porte une mutation dans le gène codant pour CsIF6.

11. Procédé de production d'un extrait aqueux d'une céréale, ledit procédé comprenant les étapes consistant à :
a. fournir des grains d'une céréale, dans lequel la céréale est de l'orge **caractérisée par** un niveau de β glucane dans les grains compris dans la plage de 1 à 3 % p/p sur une base de poids sec ;
b. soumettre les grains de céréale à une étape de germination pendant une durée comprise dans la plage de 48 à 108 h, obtenant ainsi des grains germés, dans lequel la durée de germination est mesurée à partir de l'initiation de la germination, et dans lequel l'initiation de la germination est le moment auquel de l'orge ayant une teneur en eau inférieure à 15 % est mise en contact avec suffisamment d'eau pour initier la germination, et dans lequel ladite étape de germination comprend une ou plusieurs étapes de trempage desdits grains de céréale ;
c. diviser finement lesdits grains germés, tandis que lesdits grains germés ont une teneur en eau d'au moins 20 % ; et
d. préparer un extrait aqueux desdits grains germés finement divisés,
à la condition que lesdits grains de céréale n'ont pas une teneur en eau inférieure à 20 % à aucun moment entre les étapes b) et d) ;
produisant ainsi un extrait aqueux de la céréale.

12. Procédé selon la revendication 11, dans lequel les étapes a), b), c) et/ou d) sont telles que définies dans l'une quelconque des revendications 1 à 10, et/ou, dans lequel les grains fournis à l'étape a), et/ou les grains de céréale germés, et/ou la céréale, et/ou l'extrait aqueux de la céréale sont tels que définis dans l'une quelconque des revendications 1 à 10.

13. Procédé selon l'une quelconque des revendications précédentes, dans lequel l'étape de germination ne comprend pas une étape d'immersion des grains de céréale dans une solution aqueuse sous aération.

14. Procédé selon l'une quelconque des revendications précédentes dans lequel l'étape de germination comprend une étape de trempage comprenant
i. incubation humide pendant une durée comprise dans la plage de 30 min à 10 h suivie d'une incubation à sec pendant une durée comprise dans la plage de 30 min à 24 h, ou
ii. incubation humide pendant une durée comprise dans la plage de 5 h à 12 h suivie d'une incubation à sec pendant une durée comprise dans la plage de 12 h à 30 h.
